Europäisches Patentamt

European Patent Office

Office européen des brevets

(11) Numéro de publication : **0 487 392 A1**

# (12) DEMANDE DE BREVET EUROPEEN

(21) Numéro de dépôt : **91403088.7**

(22) Date de dépôt : **18.11.91**

(51) Int. Cl.⁵ : **H04B 10/16, H04J 14/02**

(30) Priorité : **19.11.90 FR 9014360**

(43) Date de publication de la demande :
**27.05.92 Bulletin 92/22**

(84) Etats contractants désignés :
**DE FR GB IT SE**

(71) Demandeur : **AUTOMOBILES PEUGEOT**
**75, avenue de la Grande Armée**
**F-75116 Paris (FR)**
(71) Demandeur : **AUTOMOBILES CITROEN**
**62 Boulevard Victor-Hugo**
**F-92200 Neuilly-sur-Seine (FR)**

(72) Inventeur : **Dequenne, Michel**
**10, Rue de la Belle Epine**
**F-78650 Beynes (FR)**

(74) Mandataire : **Fabien, Henri et al**
**PEUGEOT SA. DAT / BPI 18, rue des Fauvelles**
**F-92250 La Garenne-Colombes (FR)**

(54) **Système de multiplexage optique bi-directionnel et procédé correspondant.**

(57)    Multiplexage optique utilisant deux types de modules émetteur-récepteur (M1ij) et (M2ij) pour chaque station (Sij).

Les segments de fibre optique (FOP) transmettent dans une direction les signaux de longueurs d'onde ($\Gamma$1) et ($\Gamma$3) émis par les modules (M1ij) et dans l'autre direction les signaux de longueurs d'ondes ($\Gamma$2) et ($\Gamma$4) émis par les modules (M2ij). Les stations peuvent être disposées en anneaux incluant une station de commande (SO).

Application aux véhicules automobiles.

Fig. 1

L'invention concerne un système de transmission de signaux optiques multiplexés à plusieurs voies et le procédé de multiplexage correspondant.

L'invention a principalement pour objet un système modulaire de multiplexage optique capable de transférer à grande vitesse des informations entre des stations possédant un certain niveau d'intelligence et d'utiliser ainsi au mieux la capacité de calcul de chacun d'eux tout en permettant l'utilisation simultanée de plusieurs longueurs d'onde en s'accommodant des pertes importantes, notamment dans le rouge et l'infra-rouge, de fibres optiques plastiques.

L'invention a également pour objet un procédé de multiplexage optique bi-directionnel c'est à dire un procédé dans lequel on fait circuler entre deux stations en communication optique des sigaux lumineux de sens opposé.

L'invention est particulièrement destinée à assurer l'ensemble des fonctions de commande et de contrôle d'un véhicule automobile.

A cet effet un système de transmission de signaux optiques multiplexés conforme à l'invention se caractérise en ce que chaque station comporte deux modules émetteur-récepteur de type différent M1 et M2 reliés à un même dispositif électronique d'élaboration et d'exploitation des signaux échangés entre les stations, chaque module émettant et recevant des signaux optiques sur un segment de fibre optique différent, les longueurs d'onde d'émission et de réception étant inversées entre les modules de type M1 et les modules de type M2, chaque station se comportant en répéteur optique pour les signaux ne la concernant pas, chaque segment de fibre optique FOP reliant un module de type M1 à un module de type M2 transmettant dans une direction les signaux émis par les modules de type M1 et dans l'autre direction les signaux émis par les modules de type M2.

Selon une caractéristique importante du système au moins trois stations sont disposées en anneau, chaque anneau comportant autant de segments de fibre optique que de stations.

Selon une autre caractéristique du système au moins une station centrale de commande équipée de deux groupes de modules de type M1 et M2 pilote au moins deux anneaux.

Selon une autre caractéristique du système au moins une station équipée d'un module d'un des deux types et d'un dispositif électronique n'est reliée par un segment de fibre optique qu'à un module de l'autre type d'une autre station.

Selon une autre caractéristique du système chaque module de type M1 comporte avantageusement au moins deux voies d'émission de signaux S1,S3 de longueurs d'onde $\Gamma 1, \Gamma 3$ et le même nombre de voies de réception de signaux S2,S4 de longueurs d'onde $\Gamma 2, \Gamma 4$, les longueurs d'onde étant choisies de façon à imbriquer les longueurs d'onde des voies d'émission et de réception avec la relation $\Gamma 4 > \Gamma 3 > \Gamma 2 > \Gamma 1$.

Enfin deux modules émetteur-récepteur de type M1 et M2 associés dans une même station ne diffèrent l'un de l'autre que par l'inversion des longueurs d'onde des signaux émis et reçus ce qui permet d'en standardiser les éléments constituants.

Le procédé de multiplexage optique bi-directionnel se caractérise en ce qu'il utilise un système de multiplexage conforme à l'invention.

L'invention sera mieux comprise à la lecture de la description qui suit d'exemples de réalisation illustrés par les dessins annexés dans lesquels:

– la Figure 1 est un schéma de principe d'un système de multiplexage optique conforme à l'invention;

– la Figure 2 montre une vue externe d'un module émetteur-récepteur à deux voies utilisé dans le système de la figure 1;

– la Figure 3 montre la disposition interne du module de la figure 2;

– la Figure 4 montre un module complémentaire du module de la figure 3;

– la Figure 5 montre schématiquement un répéteur optique constitué de deux modules émetteur-récepteur;

– la Figure 6 montre schématiquement l'utilisation de deux modules communiquant par une fibre optique.

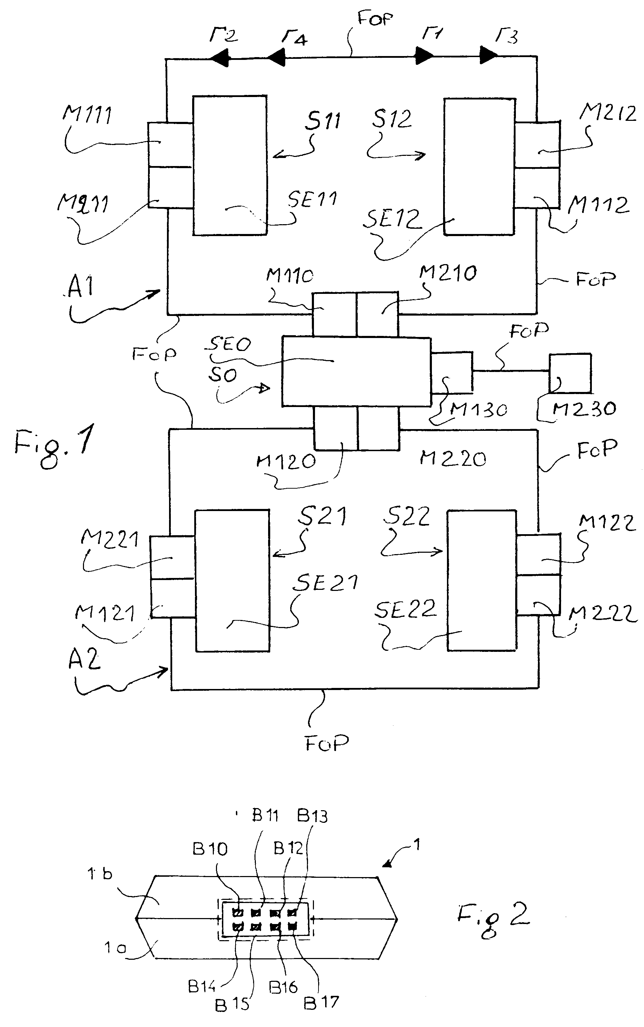

Le système représenté en figure 1 est un exemple dans lequel la structure de distribution des informations comporte des anneaux et des étoiles multiples.

La station centrale SO élabore et transmet les signaux optiques représentatifs des commandes données par le conducteur ou générées par un automatisme. Inversement cette station reçoit et décode les signaux optiques représentatifs de l'état effectif des différents organes du véhicule en vue d'un affichage d'information au poste de conduite ou d'une utilisation comme paramètre d'un automatisme.

Chaque station Sij, où $\underline{i}$ est l'indice d'un anneau Ai et $\underline{j}$ celui de la station dans l'anneau, assure des fonctions de commande et de contrôle d'actionneurs de la voiture. Ces actionneurs ne sont ni décrits ni représentés au dessin car ils sont tout à fait habituels dans les systèmes de multiplexage pour véhicules.

A titre d'exemple, dans l'anneau A1, la station S11 peut être dédiée à la fonction "contrôle moteur", la station S12 à la fonction "contrôle boîte de vitesses". Dans l'anneau A2, la station S21 peut être dédiée au contrôle de l'anti-blocage et la station S22 à celui de l'anti-patinage. Bien entendu, chaque anneau peut comporter plus de deux stations outre la station centrale SO.

Chaque station Sij comporte deux modules émetteur-récepteur optiques, l'un de type M1, référencé M1ij et l'autre de type M2 référencé M2ij, et un dispositif électronique SEij. Les modules de même type sont identiques et les différences entre le type M1 et le type M2 seront explicitées plus loin. Les dispositifs SEij élaborent et exploitent les signaux échangés entre les stations.

Dans chaque station Sij, les modules M1ij et M2ij ne sont reliés entre eux que par le dispositif électronique SEij qui décode les signaux reçus pour commander des actuateurs. En retour, le dispositif SEij élabore un signal reflet de l'état effectif des fonctions commandées par l'actuateur. Ce signal sera a son tour émis sous forme optique par l'un des modules.

Chaque module est relié optiquement par un segment de fibre optique FOP à un module de l'autre type d'une autre station. C'est ainsi que le module M111 de la station S11 est relié par un segment FOP au module M212 de la station S12.

La structure en anneau se referme au niveau de la station de commande SO qui comporte pour chaque anneau Ai un couple de modules M1iO, M2iO.

La station de commande SO comporte en outre un module M130, de type M1, relié par un segment de fibre optique FOP à un module M230, de type M2. Ce module M230 fait partie d'une station supplémentaire non représentée qui peut constituer une station de liaison vers une autre structure en anneaux pilotant par exemple les commandes de portes, de vitres, de sièges, de rétroviseurs ou de l'installation radio du véhicule.

Les modules de type M1 sont conçus pour émettre des signaux optiques de longueurs d'ondes $\Gamma1,\Gamma3$... et pour recevoir des signaux optiques de longueurs d'ondes $\Gamma2,\Gamma4$... Inversement, les modules de type M2 sont conçus pour recevoir les signaux optiques de longueurs d'onde $\Gamma1,\Gamma3$... et pour émettre des signaux optiques de longueurs d'onde $\Gamma2,\Gamma4$.... De tels modules peuvent être réalisés simplement à l'émission par des couples diode électro-luminescente/filtre interférentiel et à la réception par des couples filtre interférentiel/photodétecteur. Un exemple de réalisation particulièrement bien adapté au multiplexage automobile sera décrit plus loin.

On va maintenant expliciter le fonctionnement dans le cas d'un système à quatre longueurs d'onde $\Gamma1$ à $\Gamma4$.

On notera d'abord que, dans chaque segment de fibre optique FOP, les signaux de longueurs d'onde $\Gamma1,\Gamma3$ émis par les modules de type M1 circulent dans un sens et les signaux de longueurs d'onde $\Gamma2,\Gamma4$ émis par les modules de type M2 circulent dans l'autre sens.

Selon une caractéristique importante du procédé, les signaux reçus par un module d'une station et non destinés à cette station sont réémis par l'autre module de cette station. C'est ainsi que, si un signal de longueurs d'onde $\Gamma1$, émis par le module M110 et détecté par le module M211, n'est pas reconnu par le dispositif électronique SE11, celui-ci renvoie un signal électrique amplifié vers le module M111. La station S11 fonctionne donc, dans ce cas, en répéteur optique régénérant le signal reçu qui est alors transmis vers la station suivante etc...

Grâce à cette disposition et à l'absence de piquages ou de dérivations sur les fibres optiques, on maintien une intensité des signaux lumineux constante sur tout le réseau.

Si au contraire, le signal provenant d'une station précédente et détecté par le module M211 est reconnu par le dispositif électronique SE11 de la station, celui-ci élabore un signal électrique pilotant un actuateur et un accusé de réception qui est renvoyé à la station précédente par le module M211.

On notera que la bi-directionnalité des signaux permet d'assurer des fonctions de sécurité après coupure d'un des anneaux à la suite, par exemple, d'un accident.

On va maintenant décrire de façon plus détaillée un exemple de module émetteur-récepteur répondant aux caractéristiques du système qui vient d'être décrit.

Comme on le voit à la figure 2, un module émetteur-récepteur bi-directionnel à deux voies de référence générale 1 est constitué d'un boîtier formé de deux demi-coquilles 1a, 1b symétriques par rapport à leur plan de jonction à l'exception des éléments assurant leur fixation réciproque.

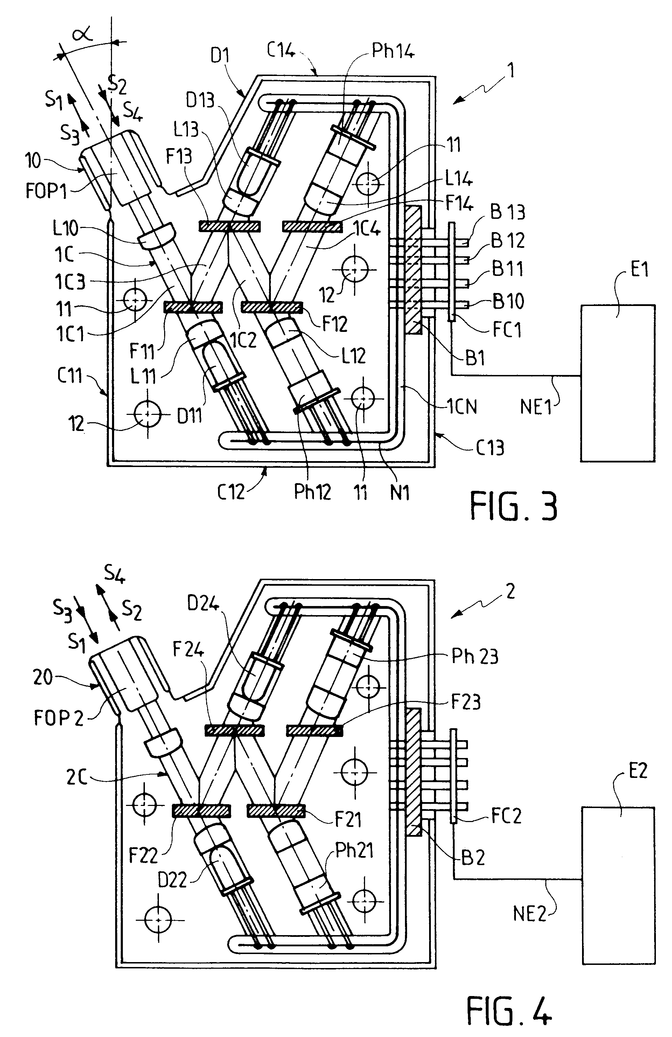

Tel qu'on peut le voir à la figure 3, tous les composants du module se mettent en place dans des empreintes formées en creux dans la demi-coquille 1a avant fermeture par la demi-coquille 1b comportant des empreintes symétriques. Les deux demi-coquilles sont fixées l'une à l'autre par des vis non représentées passant par les orifices repérés 11 auxquels correspondent des trous taraudés de l'autre demi-coquille 1b. La fixation du module sur son support peut être effectuée par deux trous 12 le traversant de part en part.

Les entrées-sorties du module se font par une fibre optique FOP1 pour les signaux optiques et par une fiche de connexion B1 à huit broches B10-B17 pour les signaux électriques.

La fibre optique FOP1 est connectée sur une extrémité cylindrique 10 disposée à la limite d'un pan coupé P1 et d'un côté C11 du module dont la forme générale est rectangulaire.

L'extrémité 10 assure l'alignement de la fibre optique FOP1 sur l'axe de la première portion rectiligne 1C1 d'un canal optique 1C comportant quatre branches de section circulaire. L'axe de la branche 1C1 fait un angle $\alpha$ avec le côté adjacent du boîtier du module et un angle $2\alpha$ avec le pan coupé P1.

A son extrémité opposée à la fibre optique FOP1 la branche 1C1 du canal 1C débouche dans une empreinte 1CN de section rectangulaire et se développant parallèlement aux trois côtés C12, C13, C14 du module. L'empreinte 1CN est destinée au logement d'une nappe à fils conducteurs N1 reliés d'une part respectivement à une des broches B10 à B17 d'une prise multibroches B1 et d'autre part par paire aux émetteurs ou aux récepteurs optiques.

En partant de l'empreinte 1CN, la branche 1C1 reçoit dans des empreintes adaptées à la forme de chaque élément optique une diode électro-luminescente D11, une lentille L11 rendant parallèle le faisceau émis par D11, un filtre dichroïque F11 laissant passer les rayonnements lumineux de longueur d'onde $\Gamma$1 et réfléchissant tous les autres et une lentille L10.

Comme on le voit au dessin, les trois autres branches du canal 1C sont deux à deux parallèles et chacune débouche d'une part dans la branche adjacente et d'autre part dans l'empreinte 1CN.

D'une façon générale, chaque branche 1C2 à 1C4 reçoit en partant de l'empreinte 1CN un élément émetteur ou récepteur D1j ou Ph1j, une lentille L1j, un filtre dichroïque F1j. Les lentilles focalisent ou rendent parallèles les faisceaux lumineux selon le cas.

Dans le module décrit, il y a d'une part deux couples émetteurs D11, F11 et D14, F14 pour les longueurs d'onde $\Gamma$1 et $\Gamma$3 et d'autre part deux couples récepteurs Ph12, F12 et Ph14, F14 pour les longueurs d'onde $\Gamma$2 et $\Gamma$4. On peut bien sûr extrapoler à un plus grand nombre de couples émetteurs et récepteurs en conservant la même disposition générale et notamment à un module à huit longueurs d'onde permettant d'assurer une transmission correspondant à celle d'un bus multiplexé de microprocesseur.

Comme dans l'exemple représenté avec D11 et D13, on dispose les diodes électro-luminescentes au plus près de la fibre optique pour minimiser à l'émission le nombre de réflexions sur des filtres dichroïques avant d'atteindre la fibre optique.

Comme on le voit au dessin, les filtres dichroïques F11 à F14 sont disposés dans deux plans verticaux parallèles aux côtés C12, C14 du boîtier de façon que l'angle d'incidence des rayons lumineux reçus ou émis vers la fibre optique FOP1 ait pour valeur $\alpha$. Sauf le dernier filtre F14 disposé à l'extrémité du chemin optique opposée à la fibre FOP1, chaque filtre est disposé au confluent de deux branches adjacentes sécantes telles les branches 1C1 et 1C3.

Les broches B10-B17 sont reliées en fonctionnement à un dispositif électronique externe E1 par une fiche de connexion FC1 et une nappe électrique NE1.

Le fonctionnement du module va maintenant être décrit. La diode électro-luminescente D11 émet un signal modulé par un signal électrique élaboré par le dispositif électronique E1 et transmis par la nappe N1.

Le faisceau lumineux mis en forme par les lentilles L11 et L10 constitue un signal S1 de longueur d'onde $\Gamma$1 grâce au filtre F11 qui ne laisse passer que la lumière de cette longueur d'onde. De la même façon, la diode D13 permet d'émettre vers la branche 1C3 un signal S3 de longueur d'onde $\Gamma$3 grâce au filtre F13. Au confluent des branches 1C3 et 1C1, le signal S3 est réfléchi par le filtre dichroïque F11 en direction de la lentille L10 qui focalise le faisceau sur l'entrée de la fibre FOP1.

Inversement les signaux S2 et S4 de longueurs d'onde respectives $\Gamma$2 et $\Gamma$4 provenant de la fibre FOP1 sont l'un et l'autre réfléchis par les filtres F11 et F13.

Le signal S4 est réfléchi par le filtre F12 qui laisse par contre passer le signal S2 qui est focalisé par la lentille L12 sur le récepteur photo-électrique Ph12. Finalement le signal S4 traverse le filtre F14 et il est focalisé sur le récepteur photo-électrique Ph14.

Les signaux électriques fournis par les récepteurs Ph12 et Ph14 sont transmis par les nappes N1 et NE1 au dispositif électronique E1.

La disposition qui vient d'être décrite évite les interactions entre émission et réception en séparant notamment les différentes voies optiques. Le spectre d'émission des diodes électro-luminescentes étant large, le flux émis par chacune non transmis par le filtre associé est réfléchi sans pouvoir atteindre un récepteur ce qui engendrerait une erreur systématique qu'il faudrait pallier par une correction électronique. On notera en outre que les voies en émission sont à cet effet placées près de l'arrivée de la fibre optique alors que les récepteurs occupent les positions les plus éloignées.

Enfin, afin de diminuer la diaphonie entre voies optiques de même sens, les longueurs d'onde d'émission sont choisies de façon à imbriquer les voies "aller" et les voies "retour" avec la relation $\Gamma$4 > $\Gamma$3 > $\Gamma$2 > $\Gamma$1.

On rend ainsi négligeable le recouvrement en spectre de deux voies optiques adjacentes. C'est ainsi que le signal S4 réfléchi successivement par les filtres F11, F13, F12 avant d'atteindre le récepteur Ph14 à travers le filtre F14 ne peut que très faiblement perturber le récepteur Ph12.

Le module 2 représenté en figure 4 est identique au module 1 de la figure 4 à la disposition des filtres près et au choix des diodes D22 et D24. Le filtre F22 identique au filtre F12 laisse passer le rayonnement de longueur d'onde $\Gamma$2 et est disposé à la place du filtre F11 du module 1.

De la même façon, les filtres F24, F23 et F21 remplacent respectivement les filtres F13, F14 et F12. D'une façon générale, dans les indices ij le premier indice i (1 ou 2) représente le type de module et le deuxième j (de 1 à 4), la longueur d'onde concernée.

Il est clair que le module de type 2 est apte à émettre des signaux S2 et S4 de longueurs d'onde $\Gamma$2 et $\Gamma$4 et à recevoir des signaux S1 et S3 de longueurs d'onde $\Gamma$1 et $\Gamma$3.

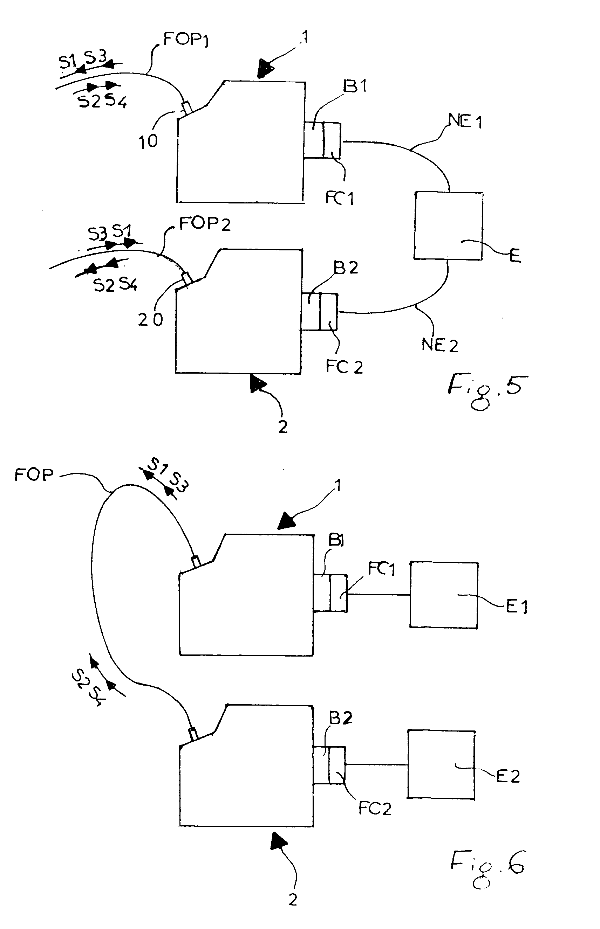

Tels qu'associés à la figure 5, un module de type 1 et un module de type 2 forment un répéteur optique bi-directionnel à quatre voies.

Les modules 1 et 2, respectivement reliés par leurs sorties optiques 10 et 20 aux fibres optiques FOP1 et FOP2, sont d'autre part connectés entre eux par un système électronique externe E à l'aide de deux nappes électriques NE1 et NE2 à huit conducteurs munies de fiches de connexion FC1 et FC2 avec les broches B1 et B2.

Le dispositif électronique E reçoit les signaux optiques captés par les détecteurs photo-électriques des modules 1 et 2 et les amplifie pour alimenter les diodes électro-luminescentes correspondantes de l'autre module. C'est ainsi que, par exemple, le signal S1 parvenant au module 2 par la fibre FOP2 est détecté par le détecteur Ph21. Le signal électrique correspondant est amplifié par le dispositif électronique E et appliqué à la diode électro-luminescente D11 qui émet vers la fibre FOP1 un signal optique correspondant S1 de longueur d'onde Γ1 après passage du filtre F11.

L'ensemble de la figure 5 constitue donc bien un répéteur optique bi-directionnel recevant par la fibre FOP2 des signaux optiques S1, S3 qui sont renvoyés amplifiés sur la fibre FOP1 et par la fibre FOP1 des signaux optiques S2, S4 qui sont renvoyés amplifiés sur la fibre FOP2.

Dans l'application représentée à la figure 6, les deux modules 1 et 2 sont utilisés pour faire dialoguer deux dispositifs électroniques E1 et E2 reliés aux broches B1 et B2, les deux modules étant reliés par une même fibre optique FOP.

Le dispositif E1 génère des signaux électriques qui transitent vers le dispositif E2 sous forme de signaux optiques S1, S3 émis par les diodes D11 et D13. Inversement le dispositif E2 génère vers E1 des signaux transitant vers le dispositif E1 sous forme de signaux optiques S2 et S4 émis par les diodes D22 et D23 associées aux filtres F22 et F23.

Il est donc clair que les modules 1 et 2 ci-dessus décrit sont des exemples de réalisation parfaitement adaptés au système décrit ci-dessus en référence à la figure 1, les modules 1 pouvant prendre la place des modules M1ij de type M1 et les modules 2 celle des modules M2ij de type M2.

## Revendications

1. Système de transmission de signaux optiques multiplexés entre des stations (Sij) munies d'un dispositif électronique (SEij) d'exploitation et d'élaboration de signaux échangés entre les stations, caractérisé en ce que chaque station (Sij) comporte deux modules émetteur-récepteur (M1ij, M2ij) de type different M1 et M2 reliés à un même dispositif électronique (SEij), chaque module émettant et recevant des signaux optiques sur un segment de fibre optique différent, les longueurs d'onde d'émission et de réception étant inversées entre les modules de type M1 et les modules de type M2, chaque station (Sij) se comportant en répéteur optique pour les signaux ne la concernant pas, chaque portion de fibre optique FOP reliant un module de type M1 à un module de type M2 transmettant dans un sens les signaux émis par les modules de type M1 et dans l'autre sens les signaux émis par les modules du type M2.

2. Système selon la revendication 1, caractérisé en ce que au moins trois stations (SO,S11,S12) sont disposées en anneau (A1 ou A2), chaque anneau comportant autant de segments de fibre optique FOP que de stations.

3. Système selon la revendication 2, caractérisé en ce qu'une station centrale de commande (SO) équipée de deux groupes de modules (M110,M210 et M120,M220) pilote au moins deux anneaux (A1,A2).

4. Système selon l'une quelconque des revendications précédentes, caractérisé en ce qu'une station équipée d'un module (M230) et d'un dispositif électronique n'est reliée par un segment de fibre optique (FOP) qu'à un module (M133) d'une autre station (SO).

5. Système selon l'une quelconque des revendications précédentes, caractérisé en ce que chaque module de type M1 comporte au moins deux voies d'émission de signaux (S1,S3) de longueurs d'onde (Γ1,Γ3) et le même nombre de voies de réception de signaux (S2,S4) de longueurs d'onde (Γ2,Γ4), les longueurs d'onde étant choisies de façon à imbriquer les longueurs d'onde des voies d'émission et de réception avec la relation Γ4 > Γ3 > Γ2 > Γ1.

6. Système selon la revendication 5, caractérisé en ce que deux modules émetteur-récepteur de type M1 et M2 associés dans une même station ne diffèrent l'un de l'autre que par l'inversion des longueurs d'onde des signaux émis et reçus.

7. Procédé de multiplexage optique bi-directionnel utilisant un système conforme à l'une quelconque des revendications précédentes.

8. Procédé selon la revendication 7, caractérisé en ce qu'il est appliqué à un véhicule automobile.

9. Procédé selon la revendication 7 ou la revendication 8, caractérisé en ce que le signal reçu par un module (M1ij ou M2ij) d'une station (Sij) et réémis par l'autre module (M2i ou M1ij) de la station s'il n'est pas reconnu par le dispositif électronique (SEij) de la station, ceci après amplification.

**10.** Procédé selon l'une quelconque des revendications 7 à 9, caractérisé en ce que, si le signal détecté par un module (M1ij ou M2ij) d'une station (Sij) est reconnu par le dispositif électronique (SEij) de la station, ce dernier élabore un signal électrique pilotant un actuateur et un accusé de réception qui est renvoyé à la station précédente par le même module.

Fig. 1

Fig 2

FIG. 3

FIG. 4

Fig.5

Fig.6

Office européen
des brevets

**RAPPORT DE RECHERCHE EUROPEENNE**

Numero de la demande

EP    91 40 3088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | GB-A-2 102 232 (STC) | 1 | H04B10/16 |
| A | * colonne 1, ligne 30 - ligne 67; figure 3 * | 9 | H04J14/02 |
| | --- | | |
| Y | FR-A-2 525 050 (JEUMONT-SCHNEIDER) | 1 | |
| A | * page 13, ligne 28 - page 14, ligne 32; figure 9 * | 5,6 | |
| | --- | | |
| A | EP-A-0 351 236 (MITSUBISHI) <br> * colonne 2, ligne 46 - colonne 3, ligne 25 * <br> * colonne 15, ligne 25 - ligne 28; figures 2,3C,7A,9,11 * | 1-4,8,10 | |
| | --- | | |
| A | PATENT ABSTRACTS OF JAPAN <br> vol. 9, no. 284 (E-357)(2007) 12 Novembre 1985 <br> & JP-A-60 125 029 ( NIPPON DENKI ) 4 Juillet 1985 <br> * abrégé * | 1,5-7 | |
| | ----- | | |

|  | **DOMAINES TECHNIQUES RECHERCHES (Int. Cl.5 )** |
|---|---|
| | H04B <br> H04J <br> G02B |

**Le présent rapport a été établi pour toutes les revendications**

| Lieu de la recherche | Date d'achèvement de la recherche | Examinateur |
|---|---|---|
| LA HAYE | 03 FEVRIER 1992 | GOUDELIS M. |

EP O FORM 1503 03.82 (P0402)